# EUROPEAN PATENT APPLICATION

(11) **EP 4 810 558 A1**
(43) Date of publication of application: **23.09.2026**
(21) Application number: 26165013.9
(22) Date of filing: 16.03.2026
(51) Int. Cl.: C08K 5/5313, C08K 5/5317, C08K 5/134, C08K 5/526, C08L 77/06

(54) **POLYMER ADDITIVE AND PREPARATION METHOD, AND POLYMER COMPOSITION**

(30) Priority: 17.03.2025 CN 202510308454
(71) Applicant: Shanghai Kingfa Sci. & Tech. DVPT. Co., Ltd., Qingpu, Shanghai 201714 (CN); KINGFA SCI. & TECH. CO., LTD., Guangzhou, Guangdong 510663 (CN); Liaoning Kingfa Biomaterial Co., Ltd., Panjin City, Liaoning Province 124000 (CN)
(72) Inventor: Li, Jide, Shanghai, 201714 (CN); Chen, Pingxu, Shanghai, 201714 (CN); Ye, Nanbiao, Shanghai, 201714 (CN); Jing, Xinke, Shanghai, 201714 (CN); Liu, Zhen, Shanghai, 201714 (CN); Tan, Xiaobin, Shanghai, 201714 (CN); Tang, Ming, Shanghai, 201714 (CN)
(74) Representative: Petraz, Gilberto Luigi

(57) **Abstract**

The present invention provides a polymer additive and a preparation method, and a polymer composition. The polymer additive includes, in parts by mass, the following components: 95-99.88 parts of a diethylphosphinate, 0.1-3 parts of an ethylbutylphosphinate, 0.01-1 part of an ethylphosphonate, and 0.01-1 part of a monoethylphosphinate. The polymer additive has a watersoluble acid value of 0.1-0.3 mg KOH/g, exhibiting lower acidity. When used as a flame retardant in a polymer composition, the polymer additive can slow down occurrence of high-temperature decomposition of dialkyl phosphinic acid, so that the polymer composition has a lower content of water-boiling precipitates, thereby enhancing the service stability of the polymer composition under hot and humid conditions and prolonging the service life. In addition, the quantity of mold deposits produced in an injection molding process is smaller, which can improve injection molding production efficiency and article appearance.

## Description

### TECHNICAL FIELD

The present invention belongs to the technical field of flame-retardant materials, and specifically relates to a polymer additive and a preparation method, and a polymer composition.

### BACKGROUND

Dialkyl phosphinates are halogen-free, environmentally friendly flame retardants characterized by high flame-retardant efficiency, small particle size, low specific gravity, low smoke, good dispersibility and compatibility, and the like, and have little influence on the physical properties and electrical properties of the base resin. Flame-retardant materials using dialkyl phosphinates exhibit a high comparative tracking index (CTI) and low smoke emission during combustion, and have drawn extensive attention in the industry. Moreover, flame-retardant polyamides using dialkyl phosphinates possess excellent mechanical properties and electrical properties, with broad application prospects among manufacturers in the electrical and electronic industry.

In the commercial application of dialkyl phosphinate flame-retardant materials, it has been found that such materials have certain performance deficiencies. For example, when dialkyl phosphinates are used to flame-retard PBT and polyamides, dialkyl phosphinic acid is released by decomposition in the high-temperature process. Moreover, since polyamides contain a larger number of polar amide groups, when dialkyl phosphinates are used to flame-retard polyamide materials, the polyamides become more prone to water absorption with a relatively high water absorption rate. For example, the water absorption rate of polyamide 66 resin can reach 2.7% under conditions of 23°C and 50% humidity. During extrusion processing or high-temperature injection molding processing, dialkyl phosphinates are inherently acidic to a certain extent and decompose to release acidic substances such as dialkyl phosphinic acid upon heating, which readily promotes decomposition of the system and leads to a larger amount of gas emission during processing. In repeated injection molding processes, severe mold deposits often form on the mold, requiring frequent mold cleaning and resulting in low production efficiency. More importantly, the formation of mold deposits affects the appearance of the articles, making it difficult to popularize and use the products satisfactorily.

At present, the main method for solving the mold deposit problem in the injection molding of dialkyl phosphinate flame-retardant polyamide materials is to add an acid acceptor to the system to reduce the acidity of the system. For example, EP2417191A1 discloses a halogen-free flame-retardant polyamide composition. Calcium oxide is added into the system, which neutralizes some acidic substances in the system, reduces the acidity of the system, and decreases the decomposition of the matrix resin, thereby reducing corrosion to the mold during high-temperature injection molding. Although this method is helpful to a certain extent in reducing mold deposits, calcium oxide easily absorbs moisture, resulting in a high water absorption rate of the system, which is difficult to control during processing. CN114874616A discloses a halogen-free flame-retardant polyamide composite material. By adding a compound system of a metal oxide and a polyhydroxy compound into the system, the prepared polyamide material exhibits better yellowing resistance, lower mold deposits, and more continuous mold opening and closing cycles. In CN112409786A, a certain amount of ethylene copolymer is added into the system as an adsorbent, so that the prepared halogen-free flame-retardant thermoplastic polyamide has lower mold deposits.

Although the externally added adsorbent can improve the mold deposits of a dialkyl phosphinate flame-retardant polyamide to a certain extent, the external auxiliaries increase the cost. Moreover, the addition of new auxiliaries inevitably affects other properties of the flame-retardant polyamide. For example, the addition of inorganic metal oxides results in a decrease in the mechanical properties of the material, there is a compatibility problem between the auxiliaries and the matrix, and a higher risk of auxiliary precipitation is also caused.

Therefore, it is expected in the art to develop a novel polymer additive which, when used for the flame-retardant modification of polymer materials, enables the polymer materials to have lower mold deposits and less additive precipitation.

### SUMMARY

In view of the deficiencies of the prior art, the present invention aims to provide a polymer additive and a preparation method, and a polymer composition. The polymer additive has a low acid value, and when used as a flame retardant for preparing a polymer composition, it can effectively reduce mold deposits and enable the polymer composition to have a lower content of water-boiling precipitates, thereby prolonging its service life under hot and humid conditions.

To achieve this objective, the present invention adopts the following technical solutions:
In a first aspect, the present invention provides a polymer additive, including, in parts by mass, the following components:

| | |
|---|---|
| a diethylphosphinate | 95-99.88 parts |
| an ethylbutylphosphinate | 0.1-3 parts |
| an ethylphosphonate | 0.01-1 part |
| a monoethylphosphinate | 0.01-1 part, |

where a water-soluble acid value of the polymer additive is 0.1-0.3 mg KOH/g.

The polymer additive provided by the present invention includes a combination of a diethylphosphinate, an ethylbutylphosphinate, an ethylphosphonate, and a monoethylphosphinate in specific contents, and has lower acidity. When used as a flame retardant in a polymer composition, the polymer additive can slow down occurrence of high-temperature decomposition of dialkyl phosphinic acid, so that the polymer composition has a lower content of water-boiling precipitates, thereby enhancing the service stability of the polymer composition under hot and humid conditions and prolonging the service life. Furthermore, the quantity of mold deposits produced in an injection molding process is smaller, thereby improving injection molding production efficiency and article appearance.

The following shows preferred technical solutions of the present invention, but is not intended to limit the technical solutions provided by the present invention. Through the following preferred technical solutions, the objectives and beneficial effects of the present invention can be better achieved and realized.

The diethylphosphinate in the polymer additive, in parts by mass, is 95-99.88 parts, and for example, may be 95.5 parts, 96 parts, 96.2 parts, 96.5 parts, 96.8 parts, 96.9 parts, 97 parts, 97.2 parts, 97.5 parts, 97.8 parts, 98 parts, 98.2 parts, 98.5 parts, 98.8 parts, 99 parts, 99.2 parts, 99.5 parts, 99.6 parts, or 99.8 parts, as well as specific point values among the above point values. For reasons of limited space and for the sake of brevity, the specific point values included in the range are not exhaustively enumerated in the present invention.

Preferably, a mass percentage content of the diethylphosphinate in the polymer additive is ≥ 94%, and for example, may be 94.5%, 95%, 95.5%, 96%, 96.2%, 96.5%, 96.8%, 96.9%, 97%, 97.2%, 97.5%, 97.8%, 98%, 98.2%, 98.5%, 98.8%, 99%, 99.2%, 99.5%, 99.8%, or 99.88%, as well as specific point values among the above point values. For reasons of limited space and for the sake of brevity, the specific point values included in the range are not exhaustively enumerated in the present invention.

The ethylbutylphosphinate in the polymer additive, in parts by mass, is 0.1-3 parts, and for example, may be 0.12 parts, 0.15 parts, 0.2 parts, 0.25 parts, 0.3 parts, 0.4 parts, 0.5 parts, 0.6 parts, 0.8 parts, 1 part, 1.2 parts, 1.5 parts, 1.8 parts, 2 parts, 2.2 parts, 2.5 parts, 2.7 parts, 2.8 parts, or 2.9 parts, as well as specific point values among the above point values. For reasons of limited space and for the sake of brevity, the specific point values included in the range are not exhaustively enumerated in the present invention.

The ethylphosphonate in the polymer additive, in parts by mass, is 0.01-1 part, and for example, may be 0.02 parts, 0.05 parts, 0.1 parts, 0.15 parts, 0.2 parts, 0.25 parts, 0.3 parts, 0.35 parts, 0.4 parts, 0.45 parts, 0.5 parts, 0.55 parts, 0.6 parts, 0.65 parts, 0.7 parts, 0.75 parts, 0.8 parts, 0.85 parts, 0.9 parts, or 0.95 parts, as well as specific point values among the above point values. For reasons of limited space and for the sake of brevity, the specific point values included in the range are not exhaustively enumerated in the present invention.

The monoethylphosphinate in the polymer additive, in parts by mass, is 0.01-1 part, and for example, may be 0.02 parts, 0.05 parts, 0.1 parts, 0.15 parts, 0.2 parts, 0.25 parts, 0.3 parts, 0.35 parts, 0.4 parts, 0.45 parts, 0.5 parts, 0.55 parts, 0.6 parts, 0.65 parts, 0.7 parts, 0.75 parts, 0.8 parts, 0.85 parts, 0.9 parts, or 0.95 parts, as well as specific point values among the above point values. For reasons of limited space and for the sake of brevity, the specific point values included in the range are not exhaustively enumerated in the present invention.

Exemplarily, the parts by mass of diethylphosphinate, ethylbutylphosphinate, ethylphosphonate, and monoethylphosphinate in the polymer additive may be analyzed and determined via testing by liquid chromatography. For example, the sample to be tested is dissolved in an aqueous sulfuric acid solution (mass concentration 30%) of 5 times the sample mass, and then diluted by 10-30 times with a mobile phase for analysis and testing. A mixture of water and methanol at a mass ratio of 9:1 is adopted for the mobile phase, with trifluoroacetic acid added at a volume content of 0.5%. A ShimNex CS C18 chromatographic column is adopted with a flow rate of 0.6 mL/min. The mass content of each component is calculated by an area normalization method.

In the present invention, the water-soluble acid value of the polymer additive is 0.1-0.3 mg KOH/g, and for example, may be 0.11 mg KOH/g, 0.12 mg KOH/g, 0.15 mg KOH/g, 0.18 mg KOH/g, 0.2 mg KOH/g, 0.22 mg KOH/g, 0.25 mg KOH/g, 0.28 mg KOH/g, or 0.29 mg KOH/g, as well as specific point values among the above point values. For reasons of limited space and for the sake of brevity, the specific point values included in the range are not exhaustively enumerated in the present invention.

Exemplarily, the water-soluble acid value of the polymer additive can be determined via testing by the following method: 1 g of the sample to be tested is uniformly wetted with ethanol (the mass of ethanol is mₑₜₕₐₙₒₗ), then water (the mass of water is m_{water}) is added, and after sealed water boiling at 90°C for 1 h, the mixture is cooled to 25°C and kept at constant temperature for 30 min, then supplemented with an aqueous ethanol solution to the total mass before the water boiling; filtration is performed to obtain a clear filtrate with a mass of m₁, the clear filtrate is subjected to a potentiometric titration test method to determine the test acid value, and the potentiometric titration test method is adopted to determine the blank acid value of (m_{water} + mₑₜₕₐₙₒₗ), where the concentration of the potassium hydroxide solution adopted for titration is 0.05 mol/L, and the water-soluble acid value of the polymer additive = test acid value × (m_{water} + mₑₜₕₐₙₒₗ)/m₁ - blank acid value.

Preferably, an organic acid value of the polymer additive is ≤ 0.05 mg KOH/g, and for example, may be 0.001 mg KOH/g, 0.005 mg KOH/g, 0.008 mg KOH/g, 0.01 mg KOH/g, 0.02 mg KOH/g, 0.025 mg KOH/g, 0.028 mg KOH/g, 0.03 mg KOH/g, 0.032 mg KOH/g, 0.035 mg KOH/g, 0.038 mg KOH/g, 0.04 mg KOH/g, or 0.045 mg KOH/g, as well as specific point values among the above point values. For reasons of limited space and for the sake of brevity, the specific point values included in the range are not exhaustively enumerated in the present invention. Further preferably, the organic acid value is 0.001-0.04 mg KOH/g.

Exemplarily, the organic acid value of the polymer additive may be determined via testing by the following method: 1 g of the sample to be tested is uniformly wetted with dichloromethane (the mass of dichloromethane is m_{dichloromethane}), and then after sealed boiling at 90°C for 1 h, cooled to 25°C and kept at constant temperature for 30 min, and dichloromethane is supplemented to the total mass before the boiling; filtration is performed to obtain a clear filtrate with a mass of m₁, the clear filtrate is subjected to a potentiometric titration test method to determine the test acid value, and the potentiometric titration test method is adopted to determine the blank acid value of dichloromethane with a mass of m_{dichloromethane}. The concentration of potassium hydroxide solution adopted for titration is 0.05 mol/L, and the organic acid value of the polymer additive = test acid value × m_{dichloromethane}/m₁ - blank acid value.

Preferably, a mass content of a sulfate radical in the polymer additive is 100-500 ppm, and for example, may be 120 ppm, 150 ppm, 200 ppm, 250 ppm, 270 ppm, 300 ppm, 350 ppm, 400 ppm, 420 ppm, 450 ppm, or 480 ppm, as well as specific point values among the above point values. For reasons of limited space and for the sake of brevity, the specific point values included in the range are not exhaustively enumerated in the present invention. Further preferably, the mass content is 110-430 ppm.

Exemplarily, the mass content of the sulfate radical in the polymer additive is determined via testing by an ion chromatography technique with an external standard method with reference to the method in Standard EN 14582:2007-"Determination of Halogen Content."

Preferably, the diethylphosphinate includes any one or a combination of at least two of aluminum diethylphosphinate, calcium diethylphosphinate, copper diethylphosphinate, zinc diethylphosphinate, iron diethylphosphinate, and titanium diethylphosphinate, further preferably aluminum diethylphosphinate.

Preferably, the ethylbutylphosphinate includes any one or a combination of at least two of aluminum ethylbutylphosphinate, calcium ethylbutylphosphinate, copper ethylbutylphosphinate, zinc ethylbutylphosphinate, iron ethylbutylphosphinate, and titanium ethylbutylphosphinate, further preferably aluminum ethylbutylphosphinate.

Preferably, the ethylphosphonate includes any one or a combination of at least two of aluminum ethylphosphonate, calcium ethylphosphonate, copper ethylphosphonate, zinc ethylphosphonate, iron ethylphosphonate, and titanium ethylphosphonate, further preferably aluminum ethylphosphonate.

Preferably, the monoethylphosphinate includes any one or a combination of at least two of aluminum monoethylphosphinate, calcium monoethylphosphinate, copper monoethylphosphinate, zinc monoethylphosphinate, iron monoethylphosphinate, and titanium monoethylphosphinate, further preferably aluminum monoethylphosphinate.

Preferably, the polymer additive further includes an alkali-insoluble substance, and the alkali-insoluble substance includes any one or a combination of at least two of a hydroxide, an oxide, a phosphate, a pyrophosphate, a polyphosphate, and a phosphite.

Preferably, the alkali-insoluble substance includes any one or a combination of at least two of aluminum hydroxide, aluminum oxide, aluminum phosphate, aluminum pyrophosphate, aluminum polyphosphate, and aluminum phosphite.

Preferably, the alkali-insoluble substance in the polymer additive, in parts by mass, is ≤ 3 parts, and for example, may be 0, 0.01 parts, 0.02 parts, 0.05 parts, 0.08 parts, 0.1 parts, 0.15 parts, 0.2 parts, 0.25 parts, 0.3 parts, 0.4 parts, 0.5 parts, 0.6 parts, 0.8 parts, 1 part, 1.2 parts, 1.5 parts, 1.8 parts, 2 parts, 2.2 parts, 2.5 parts, or 2.8 parts, as well as specific point values among the above point values. For reasons of limited space and for the sake of brevity, the specific point values included in the range are not exhaustively enumerated in the present invention.

Exemplarily, the parts by mass of the alkali-insoluble substance in the polymer additive are determined via testing by the following method: the sample to be tested is mixed with an aqueous sodium hydroxide solution (mass concentration 3%) at a mass ratio of 1:100, stirred at 35°C for 30 min, filtered with filter paper having a precision of ≤ 2 µm, and rinsed with water 3 times. The filter paper is dried and then weighed, and the mass increase value relative to the filter paper before filtration (dry filter paper) is the mass of the insoluble substance. The ratio of the mass of the insoluble substance to the mass of the sample to be tested is the mass content of the alkali-insoluble substance.

Optionally, the polymer additive further includes other phosphorus-containing compounds. The other phosphorus-containing compounds in the polymer additive, in parts by mass, are ≤ 1%, and for example, may be 0, 0.01 parts, 0.05 parts, 0.1 parts, 0.2 parts, 0.3 parts, 0.4 parts, 0.5 parts, 0.6 parts, 0.7 parts, 0.8 parts, 0.9 parts, or 0.95 parts, as well as specific point values among the above point values. For reasons of limited space and for the sake of brevity, the specific point values included in the range are not exhaustively enumerated in the present invention. Further preferably, the other phosphorus-containing compounds are 0.05-0.4 parts.

It should be noted that the other phosphorus-containing compounds are alkali-soluble phosphorus-containing substances different from the diethylphosphinate, the ethylbutylphosphinate, the ethylphosphonate, and the monoethylphosphinate. The parts by mass thereof can be determined by phosphorus nuclear magnetic resonance spectroscopy. In the phosphorus nuclear magnetic resonance spectrum, the integrated area of peaks other than those of the diethylphosphinate, the ethylbutylphosphinate, the ethylphosphonate, and the monoethylphosphinate represents the content of the other phosphorus-containing compounds.

Preferably, a D₅₀ particle size of the polymer additive is 1-100 µm, and for example, may be 10 µm, 20 µm, 30 µm, 33 µm, 35 µm, 38 µm, 40 µm, 50 µm, 60 µm, 70 µm, 80 µm, 90 µm, or 95 µm, as well as specific point values among the above point values. For reasons of limited space and for the sake of brevity, the specific point values included in the range are not exhaustively enumerated in the present invention. Further preferably, the particle size is 20-60 µm.

The D₅₀ particle size of the polymer additive refers to the particle size corresponding to a volume cumulative distribution percentage of 50%, which may be determined via testing using a laser particle size analyzer with reference to Standard GB/T 19077-2016 Particle size distribution - Laser diffraction methods.

Preferably, a moisture content of the polymer additive is ≤ 1 wt%, and for example, may be 0, 0.01 wt%, 0.02 wt%, 0.05 wt%, 0.08 wt%, 0.1 wt%, 0.15 wt%, 0.2 wt%, 0.25 wt%, 0.3 wt%, 0.4 wt%, 0.5 wt%, 0.6 wt%, 0.7 wt%, 0.8 wt%, or 0.9 wt%, as well as specific point values among the above point values. For reasons of limited space and for the sake of brevity, the specific point values included in the range are not exhaustively enumerated in the present invention. Further preferably, the moisture content is 0.05-0.3 wt%.

Exemplarily, the moisture content of the polymer additive may be determined via testing by an infrared moisture analyzer. For example, the MA 35 infrared moisture analyzer from Sartorius, Germany is adopted, and the water content is automatically tested after the sample is placed at 120°C for 30 min.

Preferably, a phosphorus content of the polymer additive is 22-25 wt%, and for example, may be 22.2 wt%, 22.5 wt%, 22.8 wt%, 23 wt%, 23.2 wt%, 23.5 wt%, 23.8 wt%, 24 wt%, 24.2 wt%, 24.5 wt%, or 24.8 wt%, as well as specific point values among the above point values. For reasons of limited space and for the sake of brevity, the specific point values included in the range are not exhaustively enumerated in the present invention.

Exemplarily, the phosphorus content of the polymer additive may be determined via testing by the following method: the sample to be tested is dissolved in an aqueous sulfuric acid solution (mass concentration 30%), and testing is performed with reference to Standard GB/T 11893-1989 "Water quality - Determination of total phosphorus - Ammonium molybdate spectrophotometric method."

In a second aspect, the present invention provides a method for preparing the polymer additive according to the first aspect, including a method I or a method II.

The method I includes the following steps:
(A1) subjecting an aqueous hypophosphite solution and an antioxidant to a free radical reaction with ethylene in the presence of an initiator to obtain an aqueous diethylphosphinate solution;
(A2) mixing the aqueous diethylphosphinate solution obtained in step (A1), an aqueous metal salt solution, and an alkaline solution, and carrying out a reaction under a condition of a pH value of 3.5-3.8 to obtain a diethylphosphinate metal salt slurry; and
(A3) mixing and stirring the diethylphosphinate metal salt slurry obtained in step (A2) with a flocculant to obtain a diethylphosphinate metal salt flocculate; and filtering, washing, and drying the diethylphosphinate metal salt flocculate to obtain the polymer additive.

The method II includes the following steps:
(B1) subjecting an aqueous hypophosphorous acid solution and an antioxidant to a free radical reaction with ethylene under the action of an initiator to obtain an aqueous diethylphosphinic acid solution;
(B2) subjecting the aqueous diethylphosphinic acid solution obtained in step (B1), sulfuric acid, and a metal hydroxide to a reaction, followed by adding an alkaline solution to obtain a diethylphosphinate slurry with a pH value of 3.8-4.2; and
(B3) mixing and stirring the diethylphosphinate slurry obtained in step (B2) with a flocculant to obtain a diethylphosphinate flocculate; and filtering, washing, and drying the diethylphosphinate flocculate to obtain the polymer additive.

The present invention finds that the reaction of hypophosphorous acid or a salt thereof with ethylene is generally carried out in the presence of a free radical initiator. Hypophosphorous acid or a salt thereof has strong reducibility due to the presence of P-H bonds, so that the free radical reaction and the oxidation reaction coexist. In the present invention, an antioxidant is adopted, which can donate electrons to an oxidizing agent, thereby reducing it to a relatively stable substance. Moreover, the free radical reaction of hypophosphorous acid or a salt thereof with ethylene is a strongly exothermic reaction, which is prone to uncontrollable phenomena during production and is accompanied by many side reactions. The antioxidant can scavenge free radicals by reacting with free radicals and neutralize their activity, which can effectively slow down the exothermic effect and reduce the occurrence of side reactions, thereby making the production process controllable. Further, the present invention finds that the pH of the reaction system exerts a relatively great influence on the crystallization behavior during the precipitation of the additive, thereby affecting the acid value of the polymer additive. The present invention controls the pH in the step of preparing the diethylphosphinate slurry, which can improve the acidity of the target product. Furthermore, the present invention further introduces a flocculant, so that the polymer additive particles are adsorbed and bound onto the molecular chains of the flocculant, which improves the filtration and washing effect of the polymer additive and can effectively reduce the acidity of the polymer additive after filtration and washing at the same time.

In summary, the present invention designs the method for preparing the polymer additive. Through the selection of materials such as the antioxidant and the flocculant, the design of process steps and process parameters such as pH, and their synergistic effect, the polymer additive with a low acid value is prepared. When used as a flame retardant in the preparation of a polymer composition, the polymer additive can reduce mold deposits, and enable the polymer composition to have a lower content of water-boiling precipitates, thereby greatly improving the service life of the polymer composition under hot and humid conditions.

Preferably, the antioxidants in step (A1) and step (B1) each independently include any one or a combination of at least two of a hindered phenol antioxidant, a hindered amine antioxidant, a phosphite antioxidant, and a thioester antioxidant, preferably any one or a combination of at least two of a hindered phenol antioxidant, a phosphite antioxidant, and a thioester antioxidant.

Preferably, the antioxidants in step (A1) and step (B1) each independently include any one or a combination of at least two of pentaerythritol tetrakis(β-(3,5-di-tert-butyl-4-hydroxyphenyl)propionate) (antioxidant 1010), n-octadecyl β-(3,5-di-tert-butyl-4-hydroxyphenyl)propionate (antioxidant 1076), N,N'-bis-(3-(3,5-di-tert-butyl-4-hydroxyphenyl)propionyl)hexanediamine (antioxidant 1098), tris(2,4-di-tert-butylphenyl) phosphite (antioxidant 168), 2,6-di-tert-butyl-p-cresol (antioxidant BHT), distearyl β,β'-thiodipropionate (antioxidant DSTP), antioxidant 215, and antioxidant 225.

The antioxidant in the present invention may be a single component, such as any one of the antioxidants listed above, and may also be a composite antioxidant compounded from multiple components, such as a combination of a hindered phenol antioxidant and a phosphite antioxidant. A typical combination is a compound of antioxidant 1010 and antioxidant 168 in different ratios, such as antioxidant 215, antioxidant 225, and the like.

Preferably, the initiators in step (A1) and step (B1) each independently include any one or a combination of at least two of an organic peroxide, a persulfate, an azo initiator, and a photoinitiator.

Preferably, the organic peroxide includes any one or a combination of at least two of diisobutyryl peroxide, benzoyl peroxide, bis(2-ethylhexyl) peroxydicarbonate, diisopropyl peroxydicarbonate, 1,1,3,3-tetramethylbutyl peroxypivalate, tert-butyl peroxypivalate, tert-amyl peroxypivalate, dilauroyl peroxide, bis(3,3,5-trimethylhexanoyl) peroxide, 2,5-dimethyl-2,5-bis(2-ethylhexanoylperoxy)hexane, 1,1,3,3-tetramethylbutyl peroxy-2-ethylhexanoate, bis(4-methylbenzoyl) peroxide, tert-amyl peroxy-2-ethylhexanoate, tert-butyl peroxy-2-ethylhexanoate, tert-butyl peroxyisobutyrate, 1,1-di(tert-butylperoxy)-3,3,5-trimethylcyclohexane, 1,1-di(tert-amylperoxy)cyclohexane, 1,1-di(tert-butylperoxy)cyclohexane, di(tert-butyl) peroxide, di(tert-amyl) peroxide, dicumyl peroxide, 2,5-di(tert-butylperoxy)-2,5-dimethylhexane, tert-butyl peroxyacetate, tert-amyl peroxybenzoate, tert-butyl peroxymaleate, and tert-butyl peroxy-2-ethylhexyl carbonate.

Preferably, the persulfate includes any one or a combination of at least two of sodium persulfate, potassium persulfate, and ammonium persulfate.

Preferably, the azo initiator includes any one or a combination of at least two of 2,2'-azobis(2-methylpropionitrile), 2,2'-azobis(2,4-dimethylvaleronitrile), 2,2'-azobis(2-methylpropionamidine) dihydrochloride, 2,2'-azobis[2-(2-imidazolin-2-yl)propane] dihydrochloride, and 1-((cyano-1-methylethyl)azo)formamide.

It should be noted that the present invention imposes no particular limitation on the specific selection of photoinitiators, and photoinitiators commonly used in the art are all suitable.

Preferably, the flocculants in step (A3) and step (B3) each independently include any one or a combination of at least two of a polyacrylamide flocculant, a starch flocculant, and a chitin flocculant, more preferably a polyacrylamide flocculant, and further preferably anionic polyacrylamide and/or non-ionic polyacrylamide.

In the method I, the hypophosphite preferably includes sodium hypophosphite and/or potassium hypophosphite, thereby obtaining an aqueous solution of sodium diethylphosphinate and/or an aqueous solution of potassium diethylphosphinate.

It should be noted that the hypophosphite may be an anhydrous hypophosphite and/or a hypophosphite hydrate.

Preferably, the hypophosphite is sodium hypophosphite, and step (A1) yields an aqueous solution of sodium diethylphosphinate.

Preferably, a mass percentage content of the hypophosphite in the aqueous hypophosphite solution in step (A1) is 10-60%, and for example, may be 15%, 20%, 25%, 30%, 35%, 40%, 45%, 50%, or 55%, as well as specific point values among the above point values. For reasons of limited space and for the sake of brevity, the specific point values included in the range are not exhaustively enumerated in the present invention. Further preferably, the mass percentage content is 30-40%.

Preferably, a mass ratio of the hypophosphite to the antioxidant in step (A1) is 100:(0.02-1.2), and for example, may be 100:0.04, 100:0.05, 100:0.06, 100:0.08, 100:0.1, 100:0.2, 100:0.3, 100:0.4, 100:0.5, 100:0.6, 100:0.7, 100:0.8, 100:0.9, 100:0.95, 100:1, 100:1.05, 100:1.1, or 100:1.15, or the like, further preferably 100:(0.05-1).

Preferably, a mass ratio of the hypophosphite to the initiator in step (A1) is 100:(0.1-5), and for example, may be 100:0.2, 100:0.5, 100:1, 100:1.5, 100:2, 100:2.5, 100:3, 100:3.5, 100:4, 100:4.5, or 100:4.8, or the like.

It should be noted that the initiator in step (A1) may be added in one portion, in batches, or continuously in the reaction process; furthermore, a portion of the initiator in step (A1) may be added in advance, and the remainder is added continuously in the reaction process.

Preferably, a molar ratio of the ethylene to the hypophosphite in step (A1) is (2-2.1):1, and for example, may be 2.01:1, 2.02:1, 2.04:1, 2.05:1, 2.06:1, 2.08:1, or 2.09:1, as well as specific point values among the above point values. For reasons of limited space and for the sake of brevity, the specific point values included in the range are not exhaustively enumerated in the present invention.

Preferably, the free radical reaction in step (A1) is carried out in a protective atmosphere.

Preferably, the protective atmosphere includes a nitrogen atmosphere and/or an argon atmosphere.

Preferably, a temperature of the free radical reaction in step (A1) is 70-120°C, and for example, may be 75°C, 80°C, 85°C, 90°C, 95°C, 100°C, 105°C, 110°C, or 115°C, as well as specific point values among the above point values. For reasons of limited space and for the sake of brevity, the specific point values included in the range are not exhaustively enumerated in the present invention. More preferably, the temperature is 80-110°C, and further preferably 90-105°C.

The free radical reaction in step (A1) is carried out in the presence of an initiator. When a pressure of a reaction system substantially no longer changes, the reaction can be regarded as complete and stopped.

Preferably, a time of the free radical reaction in step (A1) is 2-16 h, and for example, may be 3 h, 4 h, 5 h, 6 h, 7 h, 8 h, 9 h, 10 h, 11 h, 12 h, 13 h, 14 h, or 15 h, as well as specific point values among the above point values. For reasons of limited space and for the sake of brevity, the specific point values included in the range are not exhaustively enumerated in the present invention.

In the present invention, the metal salt in step (A2) is a water-soluble metal salt. Preferably, the metal salt includes a metal sulfate and/or a metal chloride, more preferably a metal sulfate.

Preferably, a metal in the metal salt in step (A2) includes any one or a combination of at least two of Al, Ca, Cu, Zn, Fe, and Ti, further preferably Al.

Preferably, the metal salt in step (A2) includes aluminum sulfate.

It should be noted that the metal salt may be an anhydrous metal salt and/or a metal salt hydrate.

Preferably, a mass percentage content of the metal salt in the aqueous metal salt solution in step (A2) is 20-40%, and for example, may be 22%, 25%, 28%, 30%, 32%, 35%, or 38%, as well as specific point values among the above point values. For reasons of limited space and for the sake of brevity, the specific point values included in the range are not exhaustively enumerated in the present invention.

Preferably, a molar ratio of the metal salt to a diethylphosphinate in step (A2) is 1:(5.8-6.2), and for example, may be 1:5.82, 1:5.85, 1:5.88, 1:5.9, 1:5.92, 1:5.95, 1:5.98, 1:6, 1:6.02, 1:6.05, 1:6.08, 1:6.1, 1:6.12, 1:6.15, or 1:6.18, further preferably 1:6.

In the present invention, a pH value of a reaction system in step (A2) is 3.5-3.8, and for example, may be 3.52, 3.55, 3.58, 3.6, 3.62, 3.65, 3.68, 3.7, 3.72, 3.75, or 3.78, as well as specific point values among the above point values. For reasons of limited space and for the sake of brevity, the specific point values included in the range are not exhaustively enumerated in the present invention.

Preferably, the alkaline solution in step (A2) includes a sodium hydroxide solution and/or a potassium hydroxide solution.

The present invention imposes no particular limitation on a mass concentration of the sodium hydroxide solution and the potassium hydroxide solution. It is only required to add the sodium hydroxide solution and/or the potassium hydroxide solution to maintain a pH of the reaction system obtained in step (A2) at 3.5-3.8.

Preferably, a temperature of the reaction in step (A2) is 20-80°C, and for example, may be 25°C, 30°C, 35°C, 40°C, 45°C, 50°C, 55°C, 60°C, 65°C, 70°C, or 75°C, as well as specific point values among the above point values. For reasons of limited space and for the sake of brevity, the specific point values included in the range are not exhaustively enumerated in the present invention. Further preferably, the temperature is 40-60°C.

Preferably, a time of the reaction in step (A2) is 0.1-5 h, and for example, may be 0.2 h, 0.5 h, 0.8 h, 1 h, 1.2 h, 1.5 h, 1.8 h, 2 h, 2.2 h, 2.5 h, 2.8 h, 3 h, 3.2 h, 3.5 h, 3.8 h, 4 h, or 4.5 h, as well as specific point values among the above point values. For reasons of limited space and for the sake of brevity, the specific point values included in the range are not exhaustively enumerated in the present invention.

It should be noted that, in step (A2) of the present invention, the aqueous metal salt solution and the alkaline solution are simultaneously added into the aqueous diethylphosphinate solution to carry out the reaction, or the aqueous metal salt solution, the alkaline solution, and the aqueous diethylphosphinate solution are continuously added into a reaction device (such as a stirred reaction kettle, a static mixer, or a dynamic mixer) at a constant flow rate for sufficient mixing and reaction. When the aqueous metal salt solution and the alkaline solution are simultaneously added into the aqueous diethylphosphinate solution to carry out the reaction, a reaction temperature is 20-80°C, preferably 30-70°C, and further preferably 40-60°C, and a dropping time of the aqueous metal salt solution and the alkaline solution is 0.1-5 h (for example, 0.5 h, 1 h, 1.5 h, 2 h, 2.5 h, 3 h, 3.5 h, 4 h, 4.5 h, etc.), preferably 0.5-3 h, and further preferably 1 h-3 h. When the aqueous metal salt solution, the alkaline solution, and the aqueous diethylphosphinate solution are continuously added into a reaction vessel at a constant flow rate, a reaction temperature is 40-80°C, preferably 50-60°C, and a reaction space velocity is 0.1-2/h (for example, 0.2/h, 0.5/h, 0.8/h, 1/h, 1.2/h, 1.5/h, 1.8/h, etc.), preferably 0.3-1/h, and further preferably 0.5-0.8/h.

Preferably, in step (A3), based on a theoretical mass obtained of the diethylphosphinate metal salt as 100%, a mass of the flocculant is 0.01-0.5%, and for example, may be 0.02%, 0.05%, 0.08%, 0.1%, 0.12%, 0.15%, 0.18%, 0.2%, 0.22%, 0.25%, 0.28%, 0.3%, 0.32%, 0.35%, 0.38%, 0.4%, 0.42%, 0.45%, or 0.48%, as well as specific point values among the above point values. For reasons of limited space and for the sake of brevity, the specific point values included in the range are not exhaustively enumerated in the present invention.

The "theoretical mass obtained of the diethylphosphinate metal salt" is calculated from feeding amounts of the diethylphosphinate and the metal salt in step (A2).

Preferably, the flocculant may be first mixed with water at 20-30°C for 10-20 min to obtain a flocculant solution, and then the flocculant solution is mixed and stirred with the diethylphosphinate metal salt slurry. A mass ratio of the flocculant to water is 1:(10-1000), and for example, may be 1:50, 1:100, 1:200, 1:300, 1:400, 1:500, 1:600, 1:700, 1:800, 1:900, or 1:950, or the like.

Preferably, a temperature of the mixing in step (A3) is 40-60°C, and for example, may be 42°C, 44°C, 46°C, 48°C, 50°C, 52°C, 54°C, 56°C, or 58°C, as well as specific point values among the above point values. For reasons of limited space and for the sake of brevity, the specific point values included in the range are not exhaustively enumerated in the present invention.

Preferably, the number of washings in step (A3) is ≥ 4, and for example, may be 5, 6, 7, 8, 9, 10, or 12, further preferably 5-10.

Preferably, a washing agent used for the washing is water.

As a preferred technical solution of the present invention, the diethylphosphinate metal salt flocculate is filtered and washed multiple times. The number of washings is ≥ 4, preferably 5-10, which can better remove impurities and acidic substances from a product, so as to obtain the polymer additive with a low acid value and better thermal stability.

Preferably, a mass ratio of water to a solid in each washing is independently (1-10):1, and for example, may be 2:1, 3:1, 4:1, 5:1, 6:1, 7:1, 8:1, 9:1, or the like, further preferably (1.5-6):1. The solid refers to a solid product obtained by filtration.

Preferably, a temperature of the drying in step (A3) is 105-250°C, and for example, may be 110°C, 120°C, 130°C, 140°C, 150°C, 160°C, 180°C, 200°C, 220°C, or 240°C, as well as specific point values among the above point values. For reasons of limited space and for the sake of brevity, the specific point values included in the range are not exhaustively enumerated in the present invention. Further preferably, the temperature is 110-150°C.

As a preferred technical solution of the present invention, the method I specifically includes the following steps:
(A1) subjecting an aqueous hypophosphite solution and an antioxidant to a free radical reaction with ethylene in the presence of an initiator in a protective atmosphere to obtain an aqueous diethylphosphinate solution,
where a mass percentage content of hypophosphite in the aqueous hypophosphite solution is 10-60%, and a mass ratio of the hypophosphite, the antioxidant, and the initiator is 100:(0.02-1.2):(0.1-5); and a temperature of the free radical reaction is 70-120°C, and the reaction is terminated when a pressure of a system no longer changes;
(A2) mixing the aqueous diethylphosphinate solution, an aqueous metal salt solution, and an alkaline solution, and carrying out a reaction under conditions of a pH value of 3.5-3.8 and 40-60°C to obtain a diethylphosphinate metal salt slurry,
where a molar ratio of the metal salt to a diethylphosphinate is 1:(5.9-6.1), and a mass percentage content of the metal salt in the aqueous metal salt solution is 20-40%; and
(A3) mixing and stirring the diethylphosphinate metal salt slurry and a flocculant solution at 40-60°C to obtain a diethylphosphinate metal salt flocculate; and filtering and washing the diethylphosphinate metal salt flocculate ≥ 4, and drying to obtain the polymer additive,
where based on a theoretical mass obtained of the diethylphosphinate metal salt as 100%, a mass of the flocculant is 0.01-0.5%.

Preferably, a mass percentage content of hypophosphorous acid in the aqueous hypophosphorous acid solution in step (B1) is 20-70%, and for example, may be 25%, 30%, 35%, 40%, 45%, 50%, 55%, 60%, or 65%, as well as specific point values among the above point values. For reasons of limited space and for the sake of brevity, the specific point values included in the range are not exhaustively enumerated in the present invention. Further preferably, the mass percentage content is 45-55%.

Preferably, a mass ratio of the hypophosphorous acid to the antioxidant in step (B1) is 100:(0.02-1.2), and for example, may be 100:0.04, 100:0.05, 100:0.06, 100:0.08, 100:0.1, 100:0.2, 100:0.3, 100:0.4, 100:0.5, 100:0.6, 100:0.7, 100:0.8, 100:0.9, 100:0.95, 100:1, 100:1.05, 100:1.1, or 100:1.15, or the like, further preferably 100:(0.05-1).

Preferably, a mass ratio of the hypophosphorous acid to the initiator in step (B1) is 100:(0.1-5), and for example, may be 100:0.2, 100:0.5, 100:1, 100:1.5, 100:2, 100:2.5, 100:3, 100:3.5, 100:4, 100:4.5, or 100:4.8, or the like.

It should be noted that the initiator in step (B1) of the present invention may be added in one portion, in batches, or continuously in the reaction process; furthermore, a portion of the initiator in step (B1) may be added in advance, and the remainder is added continuously in the reaction process.

Preferably, a molar ratio of the ethylene to the hypophosphorous acid in step (B1) is (2-2.1):1, and for example, may be 2.01:1, 2.02:1, 2.04:1, 2.05:1, 2.06:1, 2.08:1, or 2.09:1.

Preferably, the free radical reaction in step (B1) is carried out in a protective atmosphere.

Preferably, the protective atmosphere includes a nitrogen atmosphere and/or an argon atmosphere.

Preferably, a temperature of the free radical reaction in step (B1) is 60-105°C, and for example, may be 65°C, 70°C, 75°C, 80°C, 85°C, 90°C, 95°C, or 98°C, as well as specific point values among the above point values. For reasons of limited space and for the sake of brevity, the specific point values included in the range are not exhaustively enumerated in the present invention. More preferably, the temperature is 70-100°C, and further preferably 75-95°C.

The free radical reaction in step (B1) is carried out in the presence of an initiator. When a pressure of a reaction system substantially no longer changes, the reaction can be regarded as complete and stopped.

Preferably, a time of the free radical reaction in step (B1) is 2-16 h, and for example, may be 3 h, 4 h, 5 h, 6 h, 7 h, 8 h, 9 h, 10 h, 11 h, 12 h, 13 h, 14 h, or 15 h, as well as specific point values among the above point values. For reasons of limited space and for the sake of brevity, the specific point values included in the range are not exhaustively enumerated in the present invention.

Preferably, the metal hydroxide in step (B2) includes any one or a combination of at least two of aluminum hydroxide, calcium hydroxide, copper hydroxide, zinc hydroxide, iron hydroxide, and titanium hydroxide, more preferably aluminum hydroxide.

Preferably, the iron hydroxide includes ferrous hydroxide and/or ferric hydroxide.

By adopting the above metal hydroxide, a cation in the diethylphosphinate obtained in step (B2) includes any one of Al, Ca, Cu, Zn, Fe, or Ti, more preferably Al.

Preferably, in step (B2), based on a molar amount of the diethylphosphinic acid as 100%, a molar amount of the metal hydroxide is 30-50 mol%, and for example, may be 32 mol%, 33 mol%, 33.3 mol%, 34 mol%, 35 mol%, 36 mol%, 38 mol%, 40 mol%, 42 mol%, 45 mol%, or 48 mol%, as well as specific point values among the above point values. For reasons of limited space and for the sake of brevity, the specific point values included in the range are not exhaustively enumerated in the present invention.

Preferably, in step (B2), based on a molar amount of the diethylphosphinic acid as 100%, a molar amount of the sulfuric acid is 5-50 mol%, and for example, may be 8 mol%, 10 mol%, 12 mol%, 15 mol%, 18 mol%, 20 mol%, 22 mol%, 25 mol%, 28 mol%, 30 mol%, 32 mol%, 35 mol%, 38 mol%, 40 mol%, 42 mol%, 45 mol%, or 48 mol%, as well as specific point values among the above point values. For reasons of limited space and for the sake of brevity, the specific point values included in the range are not exhaustively enumerated in the present invention. Further preferably, the molar amount is 8-30 mol%, and more preferably 10-15 mol%.

Preferably, a temperature of the reaction in step (B2) is 70-150°C, and for example, may be 75°C, 80°C, 90°C, 100°C, 110°C, 120°C, 130°C, 140°C, or 145°C, as well as specific point values among the above point values. For reasons of limited space and for the sake of brevity, the specific point values included in the range are not exhaustively enumerated in the present invention. Further preferably, the temperature is 80-120°C, and more preferably 90-100°C.

Preferably, a time of the reaction in step (B2) is 2-12 h, and for example, may be 3 h, 4 h, 5 h, 6 h, 7 h, 8 h, 9 h, 10 h, 11 h, or 11.5 h, as well as specific point values among the above point values. For reasons of limited space and for the sake of brevity, the specific point values included in the range are not exhaustively enumerated in the present invention.

In the present invention, a pH value of the diethylphosphinate slurry in step (B2) is 3.8-4.2, and for example, may be 3.82, 3.85, 3.88, 3.9, 3.92, 3.95, 3.98, 4, 4.02, 4.05, 4.08, 4.1, 4.12, 4.15, or 4.18, as well as specific point values among the above point values. For reasons of limited space and for the sake of brevity, the specific point values included in the range are not exhaustively enumerated in the present invention.

Preferably, the alkaline solution in step (B2) includes a sodium hydroxide solution and/or a potassium hydroxide solution.

The present invention imposes no particular limitation on a mass concentration of the sodium hydroxide solution and the potassium hydroxide solution. It is only required to add the sodium hydroxide solution and/or the potassium hydroxide solution to maintain a pH of the diethylphosphinate slurry obtained in step (B2) at 3.8-4.2.

Preferably, in step (B3), based on a theoretical mass obtained of the diethylphosphinate as 100%, a mass of the flocculant is 0.01-0.5%, and for example, may be 0.02%, 0.05%, 0.08%, 0.1%, 0.12%, 0.15%, 0.18%, 0.2%, 0.22%, 0.25%, 0.28%, 0.3%, 0.32%, 0.35%, 0.38%, 0.4%, 0.42%, 0.45%, or 0.48%, as well as specific point values among the above point values. For reasons of limited space and for the sake of brevity, the specific point values included in the range are not exhaustively enumerated in the present invention.

The "theoretical mass obtained of the diethylphosphinate" is calculated from feeding amounts of the diethylphosphinic acid and the metal hydroxide in step (B2).

Preferably, the flocculant may be first mixed with water at 20-30°C for 10-20 min to obtain a flocculant solution, and then the flocculant solution is mixed and stirred with the diethylphosphinate slurry. A mass ratio of the flocculant to water is 1:10-1000, and for example, may be 1:50, 1:100, 1:200, 1:300, 1:400, 1:500, 1:600, 1:700, 1:800, 1:900, or 1:950, or the like.

Preferably, a temperature of the mixing in step (B3) is 40-60°C, and for example, may be 42°C, 44°C, 46°C, 48°C, 50°C, 52°C, 54°C, 56°C, or 58°C, as well as specific point values among the above point values. For reasons of limited space and for the sake of brevity, the specific point values included in the range are not exhaustively enumerated in the present invention.

Preferably, the number of washings in step (B3) is ≥ 4, and for example, may be 5, 6, 7, 8, 9, 10, or 12, further preferably 5-10.

Preferably, a washing agent used for the washing is water.

Preferably, a mass ratio of water to a solid in each washing is independently (1-10):1, and for example, may be 2:1, 3:1, 4:1, 5:1, 6:1, 7:1, 8:1, 9:1, or the like, further preferably (1.5-6):1. The solid refers to a solid product obtained by filtration.

Preferably, a temperature of the drying in step (B3) is 105-250°C, and for example, may be 110°C, 120°C, 130°C, 140°C, 150°C, 160°C, 180°C, 200°C, 220°C, or 240°C, as well as specific point values among the above point values. For reasons of limited space and for the sake of brevity, the specific point values included in the range are not exhaustively enumerated in the present invention. Further preferably, the temperature is 110-150°C.

As a preferred technical solution of the present invention, the method II specifically includes the following steps:
(B1) subjecting an aqueous hypophosphorous acid solution and an antioxidant to a free radical reaction with ethylene under the action of an initiator in a protective atmosphere to obtain an aqueous diethylphosphinic acid solution,
where a mass concentration of the aqueous hypophosphorous acid solution is 20-70%, and a mass ratio of the hypophosphorous acid, the antioxidant, and the initiator is 100:(0.02-1.2):(0.1-5); and a temperature of the free radical reaction is 60-100°C, and the reaction is terminated when a pressure of a system no longer changes;
(B2) subjecting the aqueous diethylphosphinic acid solution, sulfuric acid, and a metal hydroxide to a reaction at 70-150°C for 2-12 h, followed by adding an alkaline solution to adjust a pH of a system to 3.8-4.2 to obtain a diethylphosphinate slurry,
where based on a molar amount of the diethylphosphinic acid as 100%, a molar amount of the metal hydroxide is 30-50 mol%, and a molar amount of the sulfuric acid is 5-50 mol%; and
(B3) mixing and stirring the diethylphosphinate slurry and a flocculant solution at 40-60°C to obtain a diethylphosphinate flocculate; and filtering and washing the diethylphosphinate flocculate ≥ 4, and drying to obtain the polymer additive,
where based on a theoretical mass obtained of the diethylphosphinate as 100%, a mass of the flocculant is 0.01-0.5%.

It should be noted that the method for preparing the polymer additive proposed in the present invention is not limited to the aforementioned method I and method II. Those skilled in the art may also select other methods or routes to obtain the polymer additive with a low acid value proposed in the present invention.

In a third aspect, the present invention provides an application of the polymer additive according to the first aspect in a polymer material.

Preferably, the polymer additive is applied as a flame retardant in the polymer material.

Preferably, the polymer material includes any one or a combination of at least two of a polyamide, a polyester, a polyurethane, a styrenic polymer, a polyolefin, a polyphenylene ether, and a polyacrylate, more preferably a polyamide and/or a polyester.

In a fourth aspect, the present invention provides a polymer composition, including a polymer matrix and the polymer additive according to the first aspect.

Preferably, the polymer composition includes, in parts by mass, the following components:

| | |
|---|---|
| the polymer matrix | 40-99 parts |
| the polymer additive | 5-35 parts. |

Preferably, the polymer matrix, in parts by mass, is 40-99 parts, and for example, may be 45 parts, 50 parts, 55 parts, 60 parts, 65 parts, 70 parts, 75 parts, 80 parts, 85 parts, 90 parts, 95 parts, or 98 parts, as well as specific point values among the above point values. For reasons of limited space and for the sake of brevity, the specific point values included in the range are not exhaustively enumerated in the present invention.

Preferably, a mass percentage content of the polymer matrix in the polymer composition is ≥35%, for example, 40%, 45%, 50%, 55%, 60%, 65%, 70%, 75%, 80%, 85%, 90%, 95%, 98%, or 99%, as well as specific point values among the above point values. For reasons of limited space and for the sake of brevity, the specific point values included in the range are not exhaustively enumerated in the present invention.

Preferably, the polymer additive, in parts by mass, is 5-35 parts, and for example, may be 6 parts, 8 parts, 10 parts, 12 parts, 15 parts, 18 parts, 20 parts, 22 parts, 25 parts, 28 parts, 30 parts, 32 parts, or 34 parts, as well as specific point values among the above point values. For reasons of limited space and for the sake of brevity, the specific point values included in the range are not exhaustively enumerated in the present invention.

Preferably, a mass percentage content of the polymer additive in the polymer composition is ≥3%, for example, 5%, 6%, 8%, 10%, 12%, 15%, 18%, 20%, 22%, 25%, 28%, 30%, 32%, or 35%, as well as specific point values among the above point values. For reasons of limited space and for the sake of brevity, the specific point values included in the range are not exhaustively enumerated in the present invention. Further preferably, the mass percentage is 6%-20%.

Preferably, the polymer matrix includes a polyamide and/or a polyester.

Preferably, the polyamide includes any one or a combination of at least two of a polyamide resin and a polyamide elastomer.

The polyamide includes any one or a combination of at least two of a condensation product of a dicarboxylic acid and a diamine, a condensation product of an ω-amino acid, and a ring-opening polymerization product of a cyclic lactam. The dicarboxylic acid exemplarily includes, but is not limited to: any one or a combination of at least two of adipic acid, sebacic acid, dodecanedioic acid, terephthalic acid, and isophthalic acid. The diamine exemplarily includes, but is not limited to: any one or a combination of at least two of pentamethylenediamine, hexamethylenediamine, decamethylenediamine, dodecanediamine, butanediamine, p-phenylenediamine, and m-phenylenediamine. The cyclic lactam exemplarily includes, but is not limited to: any one or a combination of at least two of caprolactam, capryllactam, undecanolactam, and laurolactam. The ω-amino acid exemplarily includes, but is not limited to: any one or a combination of at least two of an ω-amino acid formed by ring-opening of the aforementioned cyclic lactam and aminobenzoic acid.

Preferably, the polyamide includes any one or a combination of at least two of polyamide 6 (polycaprolactam), polyamide 11 (polyundecanolactam), polyamide 12 (polydodecanolactam), polyamide 56 (polypentamethylene adipamide), polyamide 66 (polyhexamethylene adipamide), polyamide 610 (polyhexamethylene sebacamide), polyamide 612 (polyhexamethylene dodecanediamide), polyamide 1010 (polydecamethylene sebacamide), polyamide 1012 (polydecamethylene dodecanediamide), polyamide 1212 (polydodecamethylene dodecanediamide), polyamide 6T (polyhexamethylene terephthalamide), polyamide 10T (polydecamethylene terephthalamide), PPA (poly-p-phenylene terephthalamide).

Preferably, the polyester includes a condensation product of a dicarboxylic acid and/or a derivative thereof with a diol, where the dicarboxylic acid exemplarily includes, but is not limited to: any one or a combination of at least two of terephthalic acid, isophthalic acid, phthalic acid, succinic acid, adipic acid, suberic acid, azelaic acid, sebacic acid, dodecanedioic acid, cyclohexanedicarboxylic acid, hydrogenated isophthalic acid, and hydrogenated phthalic acid, and the derivative includes an acyl halides (an acid chloride), an ester, an acid anhydride, and the like formed from the dicarboxylic acid. The diol exemplarily includes, but is not limited to: any one or a combination of at least two of ethylene glycol, butanediol, and hexanediol.

Exemplarily, the polyester includes polyethylene terephthalate (PET) and/or polybutylene terephthalate (PBT).

It should be noted that the polymer composition of the present invention may further include any other fillers, other auxiliaries, and the like that are motivated to be added in the art.

Preferably, the polymer composition further includes a reinforcing material and/or a filler.

Preferably, the reinforcing material includes a glass fiber and/or a carbon fiber.

Preferably, the reinforcing material in the polymer composition, in parts by mass, is ≤ 45 parts. The reinforcing material, in parts by mass, may be 0 parts, 0.5 parts, 1 part, 2 parts, 5 parts, 8 parts, 10 parts, 15 parts, 20 parts, 25 parts, 30 parts, 35 parts, 40 parts, 42 parts, or 44 parts, as well as specific point values among the above point values. For reasons of limited space and for the sake of brevity, the specific point values included in the range are not exhaustively enumerated in the present invention.

Preferably, the filler includes any one or a combination of at least two of silicon dioxide, talc, titanium dioxide, barium sulfate, kaolin, calcium sulfate, boehmite, mica, magnesium carbonate, and glass microspheres.

Preferably, the filler in the polymer composition, in parts by mass, is ≤ 40 parts. The filler, in parts by mass, may be 0 parts, 0.5 parts, 1 part, 2 parts, 5 parts, 8 parts, 10 parts, 12 parts, 15 parts, 18 parts, 20 parts, 22 parts, 25 parts, 28 parts, 30 parts, 32 parts, 35 parts, or 38 parts, as well as specific point values among the above point values. For reasons of limited space and for the sake of brevity, the specific point values included in the range are not exhaustively enumerated in the present invention.

Preferably, the polymer composition further includes, in parts by mass, 0-15 parts of other additives. The other additives, in parts by mass, may be 0 parts, 0.1 parts, 0.5 parts, 1 part, 2 parts, 3 parts, 4 parts, 5 parts, 6 parts, 7 parts, 8 parts, 9 parts, 10 parts, 12 parts, or 14 parts, as well as specific point values among the above point values. For reasons of limited space and for the sake of brevity, the specific point values included in the range are not exhaustively enumerated in the present invention.

Preferably, the other additives include any one or a combination of at least two of an antioxidant, an ultraviolet absorber, a lubricant, a nucleating agent, a stabilizer, an antistatic agent, and a colorant.

Preferably, the polymer composition further includes any one or a combination of at least two of an antioxidant, an ultraviolet absorber, a lubricant, a nucleating agent, a stabilizer, an antistatic agent, and a colorant.

Preferably, the antioxidant, the ultraviolet absorber, the lubricant, and the nucleating agent in the polymer composition, in parts by mass, are each independently 0.01-1.5 parts, and for example, may be 0.05 parts, 0.1 parts, 0.2 parts, 0.3 parts, 0.4 parts, 0.5 parts, 0.6 parts, 0.7 parts, 0.8 parts, 0.9 parts, 1 part, 1.2 parts, or 1.4 parts, as well as specific point values among the above point values. For reasons of limited space and for the sake of brevity, the specific point values included in the range are not exhaustively enumerated in the present invention.

Preferably, the antioxidant in the polymer composition includes any one or a combination of at least two of a hindered amine antioxidant, a hindered phenol antioxidant, a phosphite antioxidant, and a thioester antioxidant.

Exemplarily, the antioxidant in the polymer composition includes any one or a combination of at least two of pentaerythritol tetrakis(β-(3,5-di-tert-butyl-4-hydroxyphenyl)propionate) (antioxidant 1010), n-octadecyl β-(3,5-di-tert-butyl-4-hydroxyphenyl)propionate (antioxidant 1076), N,N'-bis-(3-(3,5-di-tert-butyl-4-hydroxyphenyl)propionyl)hexanediamine (antioxidant 1098), tris(2,4-di-tert-butylphenyl) phosphite (antioxidant 168), bis(2,4-dicumylphenyl)pentaerythritol diphosphite (antioxidant 608), 2,6-di-tert-butyl-p-cresol (antioxidant BHT), distearyl β,β-thiodipropionate (antioxidant DSTP), antioxidant 215, and antioxidant 225.

Preferably, the lubricant includes any one or a combination of at least two of an ester lubricant, an alcohol lubricant, a hydrocarbon lubricant, a fatty acid lubricant, a fatty acid amide lubricant, and a metallic soap lubricant.

Preferably, the polymer composition further includes a synergistic flame retardant.

Preferably, a mass ratio of the polymer additive to the synergistic flame retardant is 1:(0.1-5), and for example, may be 1:0.2, 1:0.3, 1:0.4, 1:0.5, 1:0.6, 1:0.8, 1:1, 1:1.2, 1:1.5, 1:1.8, 1:2, 1:2.5, 1:3, 1:3.5, 1:4, or 1:4.5, or the like, further preferably 1:(0.1-1), and more preferably 1:(0.1-0.5).

Preferably, the polymer composition further includes, in parts by mass, 0-18 parts of the synergistic flame retardant. The synergistic flame retardant, in parts by mass, may be 0, 0.1 part, 0.5 part, 1 part, 2 parts, 3 parts, 4 parts, 5 parts, 6 parts, 7 parts, 8 parts, 9 parts, 10 parts, 12 parts, 14 parts, 15 parts, or 16 parts, as well as specific point values among the above point values. For reasons of limited space and for the sake of brevity, the specific point values included in the range are not exhaustively enumerated in the present invention.

Preferably, the synergistic flame retardant includes any one or a combination of at least two of a melamine derivative, zinc borate, zinc stannate, zinc sulfide, and boehmite.

Preferably, the melamine derivative includes any one or a combination of at least two of a melamine polyphosphate salt, melamine polyphosphate, and melam.

In a preferred technical solution, the polymer composition includes, in parts by mass, the following components:

| | |
|---|---|
| the polymer matrix | 40-99 parts |
| the polymer additive | 5-35 parts |
| the reinforcing material | 0-45 parts |
| the synergistic flame retardant | 0-18 parts |
| the lubricant | 0-1.5 parts |
| the antioxidant | 0-1.5 parts. |

Exemplarily, the method for preparing the polymer composition includes: melt-blending and extruding the components of the polymer composition to obtain the polymer composition.

Preferably, the melt-blending is performed in a screw extruder.

Preferably, the screw extruder is a twin-screw extruder.

Preferably, a temperature of the screw extruder is 180-330°C, and for example, may be 190°C, 200°C, 210°C, 220°C, 230°C, 240°C, 250°C, 260°C, 270°C, 280°C, 290°C, 300°C, 310°C, or 320°C, as well as specific point values among the above point values. For reasons of limited space and for the sake of brevity, the specific point values included in the range are not exhaustively enumerated in the present invention.

Preferably, the extrusion is further followed by steps of pelletizing and drying.

Compared with the prior art, the present invention has the following beneficial effects:
The polymer additive provided by the present invention includes a combination of the diethylphosphinate, the ethylbutylphosphinate, the ethylphosphonate, and the monoethylphosphinate, and has lower acidity. When used as a flame retardant in a polymer composition, the polymer additive can slow down occurrence of high-temperature decomposition of dialkyl phosphinic acid, so that the polymer composition has a lower content of water-boiling precipitates, thereby enhancing the service stability of the polymer composition under hot and humid conditions and prolonging the service life. Furthermore, the quantity of mold deposits produced in an injection molding process is smaller, which can improve injection molding production efficiency and article appearance.

### DETAILED DESCRIPTION OF EMBODIMENTS

The technical solutions of the present invention are further described below through specific embodiments. Those skilled in the art should understand that examples described are merely to facilitate an understanding of the present invention and should not be regarded as specific limitations to the present invention.

The terms "comprise," "include," "have," "contain," or any other variations thereof as used herein are intended to cover non-exclusive inclusion. For example, a composition, step, method, article, or device including the listed elements is not necessarily limited to only those elements, but may also include other elements not expressly listed or elements inherent to such a composition, step, method, article, or device.

In the following detailed description, test methods for the polymer additive are as follows:
(1) Test for contents of a diethylphosphinate, an ethylbutylphosphinate, an ethylphosphonate, and a monoethylphosphinate
   The contents are analyzed and determined via testing by adopting a liquid chromatograph (LC20A, Shimadzu, Japan). A commercially available standard sample is adopted for the diethylphosphinate. The pure product of the ethylbutylphosphinate (prepared with reference to Example 4 of CN103172668A) is adopted as the standard sample. The pure product of the ethylphosphonate (prepared with reference to Example 2 of CN104371142A) is adopted as the standard sample. The pure product of the monoethylphosphinate (prepared with reference to Example 1 of CN103172668A) is adopted as the standard sample. The sample to be tested is dissolved in an aqueous sulfuric acid solution (mass concentration 30%) with 5 times the mass of the sample, and then diluted 20 times with the mobile phase for analysis and testing. The mobile phase is a mixture of water and methanol at a mass ratio of 9:1, added with trifluoroacetic acid at a volume content of 0.5%. A ShimNex CS C18 column (5 µm, 4.6×250 mm) is adopted, with a flow rate of 0.6 mL/min. The mass content of each component is calculated by the area normalization method.
(2) Content of an alkali-insoluble substance
   5 g of the sample to be tested is taken and stirred with 500 g of an aqueous sodium hydroxide solution (mass concentration 3%) at 35°C for 30 min, filtered with filter paper having a precision of ≤ 2 µm, and rinsed with 100 g of water 3 times. The filter paper is dried and then weighed, and the mass increase value relative to the filter paper before filtration (dry filter paper) is the mass of the insoluble substance. The ratio of the mass of the insoluble substance to the mass of the sample to be tested (5 g) is the mass content of the alkali-insoluble substance.
(3) Content of other phosphorus-containing compounds
   The sample to be tested is mixed with a deuterated aqueous solution of deuterated sodium hydroxide (mass concentration 10%) at a mass ratio of 1:30 to completely dissolve the sample, followed by filtration. The obtained clear liquid is measured by a nuclear magnetic resonance spectrometer (NMR, Bruker nuclear magnetic resonance NMR spectrometer, AVANCE NEO 400 MHz) to obtain a phosphorus nuclear magnetic resonance spectrum. The phosphorus nuclear magnetic resonance spectrum is integrated, and the proportion of the integrated area of peaks other than the known diethylphosphinate, ethylbutylphosphinate, ethylphosphonate, and monoethylphosphinate is regarded as the content of other phosphorus-containing compounds.
(4) Water-soluble acid value
   1 g of the sample to be tested is taken, added with 5.00±0.01 g (mₑₜₕₐₙₒₗ) of ethanol for uniform wetting, and then added with 50±0.01 g (m_{water}) of room-temperature water. The total weight m₀ is weighed together with the bottle and the stirrer. After sealed water boiling at 90°C for 1 h, the mixture is cooled to 25°C and kept at a constant temperature for 30 min, and then supplemented with an aqueous ethanol solution (mass ratio of ethanol to water: 1:10) to the total weight m₀. Filtration is performed to obtain a clear filtrate with a mass of m₁, the clear filtrate is subjected to a potentiometric titration test method to determine the test acid value, and the potentiometric titration test method is adopted to determine the blank acid value of (m_{water} + mₑₜₕₐₙₒₗ), where the concentration of the potassium hydroxide solution adopted for titration is 0.05 mol/L, and the water-soluble acid value of the polymer additive = test acid value × (m_{water} + mₑₜₕₐₙₒₗ)/m₁ - blank acid value.
(5) Organic acid value
   1 g of the sample to be tested is taken, added with 50.0±0.01 g (m_{dichloromethane}) of dichloromethane for uniform wetting. The total weight m₀ is weighed together with the bottle and the stirrer. After sealed boiling at 90°C for 1 h, the mixture is cooled to 25°C and kept at a constant temperature for 30 min, and then supplemented with dichloromethane to the total weight m₀. Filtration is performed to obtain a clear filtrate with a mass of m₁, the clear filtrate is subjected to a potentiometric titration test method to determine the test acid value, and the potentiometric titration test method is adopted to determine the blank acid value of dichloromethane with a mass of m_{dichloromethane}, where the concentration of the potassium hydroxide solution adopted for titration is 0.05 mol/L, and the organic acid value of the polymer additive = test acid value × m_{dichloromethane}/m₁ - blank acid value.
(6) Mass content of a sulfate radical
   The measurement is performed by an ion chromatography technique with an external standard method with reference to the method in Standard EN 14582:2007-"Determination of Halogen Content."

In the following specific embodiments of the present invention, all materials for which no preparation method is provided are commercially available chemicals, and the specific information of some materials is as follows:

| | Grade, manufacturer |
|---|---|
| Sodium hypophosphite monohydrate | Changshu New-Tech Chemicals Co., Ltd. |
| Hypophosphorous acid | 50 wt% aqueous solution, Changshu New-Tech Chemicals Co., Ltd. |
| Sodium persulfate | National standard superior grade, Fujian Zhanhua Chemical Co., Ltd. |
| Antioxidant 1010 | RIANOX 1010, Rianlon Corporation |
| Antioxidant 168 | RIANOX 168, Rianlon Corporation |
| Antioxidant 1076 | RIANOX 1076, Rianlon Corporation |
| Ethylene | Content ≥ 99.9%, industrial cylinder ethylene |
| Aluminum sulfate | High whiteness iron-free aluminum sulfate, Shandong Landing New Energy Technology Co., Ltd. |
| Flocculant: anionic polyacrylamide | Gongyi Xinqi Polymer Co., Ltd. |

The polymer additive and the preparation method thereof according to the present invention will be described in detail below by way of multiple examples, but the polymer additive and the preparation method thereof are not limited to these examples.

### Examples 1-5 and Comparative Examples 1-6

A polymer additive and a preparation method thereof, where the preparation method was as follows:
(1) 31.8 kg of solid sodium hypophosphite monohydrate, 50 kg of water, 500 g of sodium persulfate, antioxidant 1010 with a mass of m₁, and antioxidant 168 with a mass of m₂ were placed into an autoclave. The autoclave was purged with nitrogen 3 times. Ethylene was pressurized to a constant pressure of 1.5 MPa via a pressure reducer, and the system was heated to 95°C and held at this temperature for 4 h. During the 4-h temperature holding, 2500 g of an aqueous sodium persulfate solution with a mass percentage content of 20% was continuously supplemented. The system was then held at 95°C for another 1 h, cooled, and vented to obtain an aqueous sodium diethylphosphinate solution.
(2) The aqueous sodium diethylphosphinate solution obtained in step (1) was diluted to a mass percentage content of sodium diethylphosphinate of 20% (containing 6 mol of sodium diethylphosphinate), and was heated to temperature T₁. An aqueous aluminum sulfate solution (1 mol of aluminum sulfate octadecahydrate, mass percentage content 28%) was continuously added dropwise within 1 h, and the pH value was controlled using a potassium hydroxide solution (mass percentage content 5%) to obtain an aluminum diethylphosphinate slurry.
(3) At 50°C, an aqueous flocculant solution prepared from anionic polyacrylamide with a mass of m₃ and 50 g of water was added to the aluminum diethylphosphinate slurry obtained in step (2). The mixture was stirred until a flocculated state was reached, followed by filtration. The filter cake was washed n times with water of 3 times its mass, and was dried at 120°C to constant weight to obtain the polymer additive.

Specific process parameters of the preparation method and relevant data of the prepared polymer additive are as shown in Table 1.

**Table 1**

| | | Example 1 | Example 2 | Example 3 | Example 4 | Example 5 | Comparative Example 1 | Comparative Example 2 | Comparative Example 3 | Comparative Example 4 | Comparative Example 5 | Comparative Example 6 |
|---|---|---|---|---|---|---|---|---|---|---|---|---|
| Step (1) | m₁ (g) | 10 | 25 | 50 | 25 | 25 | 0 | 25 | 25 | 25 | 25 | 25 |
| | m₂ (g) | 10 | 25 | 50 | 25 | 25 | 0 | 25 | 25 | 25 | 25 | 25 |
| Step (2) | T₁ (°C) | 50 | 50 | 40 | 60 | 50 | 50 | 50 | 35 | 65 | 50 | 50 |
| | pH value | 3.6 | 3.7 | 3.8 | 3.5 | 3.7 | 3.6 | 3.7 | 3.7 | 3.7 | 4 | 3.3 |
| Step (3) | m₃ (g) | 0.5 | 0.5 | 0.5 | 0.1 | 2 | 0.5 | 0 | 0.5 | 0.5 | 0.5 | 0.5 |
| | n (times) | 5 | 5 | 5 | 5 | 7 | 5 | 5 | 5 | 5 | 5 | 5 |
| Polymer additive No. | | A1 | A2 | A3 | A4 | A5 | D1 | D2 | D3 | D4 | D5 | D6 |
| Aluminum diethylphosphiate (parts) | | 98.68 | 98.77 | 98.71 | 98.69 | 98.62 | 98.7 | 98.53 | 98.49 | 98.59 | 98.8 | 98.74 |
| Aluminum ethylbutylphosp hinate (parts) | | 0.71 | 0.61 | 0.78 | 0.66 | 0.73 | 0.53 | 0.88 | 0.63 | 0.69 | 0.57 | 0.58 |
| Aluminum ethylphosphonate (parts) | | 0.15 | 0.14 | 0.12 | 0.16 | 0.13 | 0.15 | 0.22 | 0.42 | 0.18 | 0.24 | 0.13 |
| Aluminum monoethylphosp hinate (parts) | | 0.18 | 0.17 | 0.13 | 0.13 | 0.14 | 0.12 | 0.14 | 0.13 | 0.14 | 0.10 | 0.15 |
| Alkali-insoluble substance (parts) | | 0 | 0 | 0 | 0 | 0 | 0 | 0 | 0 | 0 | 0 | 0 |
| Other phosphorus-containing compounds (parts) | | 0.28 | 0.31 | 0.26 | 0.36 | 0.38 | 0.5 | 0.23 | 0.33 | 0.4 | 0.29 | 0.40 |
| Sulfate radical (ppm) | | 239 | 383 | 159 | 275 | 101 | 292 | 300 | 365 | 279 | 367 | 281 |
| Water-soluble acid value (mg KOH/g) | | 0.209 | 0.231 | 0.191 | 0.258 | 0.282 | 0.391 | 0.374 | 0.333 | 0.341 | 0.339 | 0.429 |
| Organic acid value (mg KOH/g) | | 0.016 | 0.021 | 0.002 | 0.014 | 0.004 | 0.059 | 0.049 | 0.047 | 0.037 | 0.052 | 0.056 |

### Examples 6-8, Comparative Examples 7-10

A polymer additive and a preparation method thereof, where the preparation method was as follows:
(1) 39.6 kg of an aqueous hypophosphorous acid solution with a mass percentage content of 50%, 500 g of sodium persulfate, and an antioxidant with a mass of m₄ were placed into an autoclave. The autoclave was purged with nitrogen 3 times. Ethylene was pressurized to a constant pressure of 1.5 MPa via a pressure reducer, and the system was heated to 85°C and held at this temperature for 5.5 h. During the temperature holding, 3500 g of an aqueous sodium persulfate solution with a mass percentage content of 10% was continuously supplemented. Then the system was held at 85°C for 1.5 h, cooled, and vented to obtain an aqueous diethylphosphinic acid solution.
(2) The aqueous diethylphosphinic acid solution obtained in step (1) (diethylphosphinic acid: 6 mol), an aqueous sulfuric acid solution (mass percentage content of sulfuric acid: 30%, molar amount: 0.6 mol), and 2 mol of aluminum hydroxide were mixed. The mixture was heated to 90°C and stirred for reaction for 8 h, and the pH value was adjusted using a sodium hydroxide solution (mass percentage content: 10%) to obtain an aluminum diethylphosphinate slurry.
(3) At 50°C, an aqueous flocculant solution prepared from anionic polyacrylamide with a mass of m₅ and 50 g of water was added to the aluminum diethylphosphinate slurry obtained in step (2). The mixture was stirred until an aluminum diethylphosphinate flocculate was formed, followed by filtration. The filter cake was washed 5 times with water of 3 times its mass, and was dried at 110°C to constant weight to obtain the polymer additive.

Specific process parameters of the preparation method and relevant data of the prepared polymer additive are as shown in Table 2; "--" indicates that the material is not added.

**Table 2**

| | | Example 6 | Example 7 | Example 8 | Comparative Example 7 | Comparative Example 8 | Comparative Example 9 | Comparative Example 10 |
|---|---|---|---|---|---|---|---|---|
| Step (1) | Antioxidant | 1076 | 1076 | 1076 | -- | 1076 | 1076 | 1076 |
| | m₄ (g) | 50 | 50 | 50 | -- | 50 | 50 | 50 |
| Step (2) | pH value | 3.8 | 4.0 | 4.2 | 3.8 | 3.8 | 3.6 | 4.3 |
| Step (3) | m₅ (g) | 0.5 | 0.5 | 0.5 | 0.5 | -- | 0.5 | 0.5 |
| Polymer additive No. | | A6 | A7 | A8 | D7 | D8 | D9 | D10 |
| Aluminum diethylphosphinate (parts) | | 96.89 | 96.7 | 96.66 | 96.64 | 96.87 | 96.55 | 96.58 |
| Aluminum ethylbutylphosphinate (parts) | | 2.22 | 2.25 | 2.46 | 2.11 | 2.21 | 2.5 | 2.4 |
| Aluminum ethylphosphonate (parts) | | 0.28 | 0.35 | 0.35 | 0.57 | 0.29 | 0.27 | 0.3 |
| Aluminum monoethylphosphinate (parts) | | 0.05 | 0.06 | 0.03 | 0.05 | 0.06 | 0.04 | 0.05 |
| Alkali-insoluble substance (parts) | | 0.27 | 0.32 | 0.17 | 0.06 | 0.2 | 0.24 | 0.28 |
| Other phosphorus-containing compounds (parts) | | 0.29 | 0.32 | 0.33 | 0.57 | 0.37 | 0.4 | 0.39 |
| Sulfate radical (ppm) | | 302 | 408 | 422 | 457 | 472 | 409 | 352 |
| Water-soluble acid value (mg KOH/g) | | 0.111 | 0.153 | 0.142 | 0.31 | 0.307 | 0.322 | 0.311 |
| Organic acid value (mg KOH/g) | | 0.022 | 0.04 | 0.035 | 0.067 | 0.066 | 0.062 | 0.057 |

It can be seen from Table 1 and Table 2 that the polymer additives provided in Examples 1-8 of the present invention all have lower acid values, with water-soluble acid values of 0.1-0.3 mg KOH/g, whereas the acid values of the polymer additives provided in Comparative Examples 1-10 are significantly higher.

The application of the polymer additive according to the present invention will be described in detail below by way of application examples, but the application of the polymer additive is not limited to these application examples.

In the following application examples, materials for which no preparation method is provided are all commercially available chemicals, and the specific information is as follows:

| | Grade, manufacturer |
|---|---|
| Polyamide 66 (PA66) | PA66 M2000, Guangdong Xinhui Meida Nylon Co., Ltd. |
| Polyamide 6 (PA6) | PA6 EPR24, Shenma Industrial Co., Ltd. |
| Melamine polyphosphate (MPP) | BUDIT 3141, Budenheim GmbH, Germany |
| Glass fiber | ECS10-03-568H, China Jushi Co., Ltd. |
| Lubricant | TR044W, Struktol GmbH, Germany |
| Antioxidant 1098 | RIANOX 1098, Rianlon Corporation |
| Antioxidant 168 | RIANOX 168, Rianlon Corporation |

### Application Examples 1-8, Comparative Application Examples 1-10

A polymer composition, specifically a polyamide composition, where types and use amounts of each component are as shown in Table 3 and Table 4, and the use amount unit of each component is "parts by mass."

A method for preparing the polyamide composition included: polyamide 66, polyamide 6, a glass fiber, an polymer additive, MPP, an antioxidant, and a lubricant were mixed according to the formulation amounts to obtain a premix; and the premix was added into a twin-screw extruder at a screw speed of 380 rpm, and with temperatures of zones 1-12 at 90°C, 180°C, 260°C, 250°C, 230°C, 230°C, 220°C, 220°C, 220°C, 220°C, 260°C, and 260°C, respectively. After melt mixing and extrusion pelletizing, polyamide composition pellets are obtained.

The polyamide composition was subjected to the following performance tests:
(1) Water-boiling phosphorus content test: 50 g of polyamide composition pellets were taken and added to 500 mL of hot water at 90°C, followed by water-boiling for 1 h. The mixture was cooled to room temperature and filtered. The phosphorus content of the filtrate was determined by the ammonium molybdate spectrophotometric method specified in GB/T 11893-1989.
(2) Injection molding mold deposit test method: using an injection molding machine, the polyamide composition pellets were continuously injected for 150 cycles at injection temperatures of 290°C, 285°C, 280°C, and 260°C. The mold deposit sample finally collected from the mold was removed and weighed by adopting an analytical balance.

The test data are as shown in Table 3 and Table 4.

**Table 3**

| | | Applic ation Examp le 1 | Applic ation Examp le 2 | Applic ation Examp le 3 | Applic ation Examp le 4 | Applic ation Examp le 5 | Applic ation Examp le 6 | Applic ation Examp le 7 | Applic ation Examp le 8 |
|---|---|---|---|---|---|---|---|---|---|
| Polyami de | PA66 | 46 | 46 | 46 | 46 | 46 | 35 | 46 | 46 |
| | PA6 | 11 | 11 | 11 | 11 | 11 | 8 | 11 | 11 |
| Polyme r additive | Type | A1 | A2 | A3 | A4 | A5 | A6 | A7 | A8 |
| | Use | 13 | 13 | 13 | 10 | 15 | 13 | 13 | 13 |
| | amount | | | | | | | | |
| Glass fiber | | 25 | 25 | 25 | 25 | 25 | 18 | 25 | 25 |
| MPP | | 4 | 4 | 4 | 6 | 2 | 4 | 4 | 4 |
| Lubricant | | 0.5 | 0.5 | 0.5 | 0.5 | 0.5 | - | 0.4 | 0.5 |
| Antioxi dant | 1098 | 0.2 | 0.2 | 0.2 | 0.2 | 0.2 | 0.1 | - | 0.2 |
| | 168 | 0.3 | 0.3 | 0.3 | 0.3 | 0.3 | 0.1 | - | 0.3 |

| Performance data | | | | | | | | | |
|---|---|---|---|---|---|---|---|---|---|
| Mold deposits (mg) | | 4.3 | 4.5 | 5.0 | 5.3 | 5.6 | 3.0 | 3.7 | 4.2 |
| Water-boiling phosphorus content (ppm) | | 396 | 408 | 421 | 456 | 464 | 326 | 360 | 411 |

**Table 4**

| | | Comp arativ e Appli cation Exam ple 1 | Comp arativ e Appli cation Exam ple 2 | Comp arativ e Appli cation Exam ple 3 | Comp arativ e Appli cation Exam ple 4 | Comp arativ e Appli cation Exam ple 5 | Comp arativ e Appli cation Exam ple 6 | Comp arativ e Appli cation Exam ple 7 | Comp arativ e Appli cation Exam ple 8 | Comp arativ e Appli cation Exam ple 9 | Comp arativ e Appli cation Exam ple 10 |
|---|---|---|---|---|---|---|---|---|---|---|---|
| Polyam ide | PA66 | 46 | 46 | 46 | 46 | 46 | 46 | 46 | 46 | 46 | 46 |
| | PA6 | 11 | 11 | 11 | 11 | 11 | 11 | 11 | 11 | 11 | 11 |
| Polyme r additive | Type | D1 | D2 | D3 | D4 | D5 | D6 | D7 | D8 | D9 | D10 |
| | Use amoun t | 13 | 13 | 13 | 13 | 13 | 13 | 13 | 13 | 13 | 13 |
| Glass fiber | | 25 | 25 | 25 | 25 | 25 | 25 | 25 | 25 | 25 | 25 |
| MPP | | 4 | 4 | 4 | 4 | 4 | 4 | 4 | 4 | 4 | 4 |
| Lubricant | | 0.5 | 0.5 | 0.5 | 0.5 | 0.5 | 0.5 | 0.5 | 0.5 | 0.5 | 0.5 |
| Antioxi dant | 1098 | 0.2 | 0.2 | 0.2 | 0.2 | 0.2 | 0.2 | 0.2 | 0.2 | 0.2 | 0.2 |
| | 168 | 0.3 | 0.3 | 0.3 | 0.3 | 0.3 | 0.3 | 0.3 | 0.3 | 0.3 | 0.3 |

| Performance data | | | | | | | | | | | |
|---|---|---|---|---|---|---|---|---|---|---|---|
| Mold deposits (mg) | | 10.4 | 8.7 | 8.5 | 8.8 | 9.3 | 11.5 | 9.0 | 7.9 | 8.4 | 8.3 |
| Water-boiling phosphorus content (ppm) | | 599 | 531 | 540 | 578 | 519 | 614 | 561 | 520 | 533 | 509 |

As can be seen from the data in Table 3, when the polymer additive with a low acid value provided by the present invention is used as a flame retardant in a polyamide composition, it can significantly reduce mold deposits produced by injection molding, such that the mold deposits are ≤ 5.6 mg. Furthermore, the water-boiling phosphorus content of the polyamide composition is ≤ 464 ppm, which reduces the content of water-boiling precipitates and improves the stability and service life of the polyamide composition under hot and humid conditions.

As can be seen from the test data in Table 4, since the polymer additives of Comparative Examples 1-10 have a high acid value, when used as flame retardants in polyamide compositions, they lead to more injection molding mold deposits, an increased water-boiling phosphorus content, and significantly insufficient stability under hot and humid conditions.

The applicant declares that the polymer additive and the preparation method, and the polymer composition of the present invention are illustrated by the above examples, but the present invention is not limited to the above examples, that is, it does not mean that the present invention needs to rely on the above examples to be implemented. Those skilled in the art should understand that any improvements to the present invention, equivalent substitutions of various raw materials in products of the present invention, addition of auxiliary ingredients, and selections of specific methods all fall within the scope of protection and the scope of disclosure of the present invention.

## Claims

1. A polymer additive, comprising, in parts by mass, the following components:
a diethylphosphinate 95-99.88 parts
an ethylbutylphosphinate 0.1-3 parts
an ethylphosphonate 0.01-1 part
a monoethylphosphinate 0.01-1 part,
wherein a water-soluble acid value of the polymer additive is 0.1-0.3 mg KOH/g.

2. The polymer additive according to claim 1, wherein an organic acid value of the polymer additive is ≤ 0.05 mg KOH/g;
and/or a mass content of a sulfate radical in the polymer additive is 100-500 ppm.

3. The polymer additive according to claim 1, wherein the diethylphosphinate comprises any one or a combination of at least two of aluminum diethylphosphinate, calcium diethylphosphinate, copper diethylphosphinate, zinc diethylphosphinate, iron diethylphosphinate, and titanium diethylphosphinate;
and/or the ethylbutylphosphinate comprises any one or a combination of at least two of aluminum ethylbutylphosphinate, calcium ethylbutylphosphinate, copper ethylbutylphosphinate, zinc ethylbutylphosphinate, iron ethylbutylphosphinate, and titanium ethylbutylphosphinate;
and/or the ethylphosphonate comprises any one or a combination of at least two of aluminum ethylphosphinate, calcium ethylphosphinate, copper ethylphosphinate, zinc ethylphosphinate, iron ethylphosphinate, and titanium ethylphosphinate;
and/or the monoethylphosphinate comprises any one or a combination of at least two of aluminum monoethylphosphinate, calcium monoethylphosphinate, copper monoethylphosphinate, zinc monoethylphosphinate, iron monoethylphosphinate, and titanium monoethylphosphinate.

4. The polymer additive according to claim 1, further comprising an alkali-insoluble substance, wherein the alkali-insoluble substance comprises any one or a combination of at least two of a hydroxide, an oxide, a phosphate, a pyrophosphate, a polyphosphate, and a phosphite;
and/or the alkali-insoluble substance in the polymer additive, in parts by mass, is ≤ 3 parts.

5. A method for preparing the polymer additive according to any one of claims 1-4, comprising a method I or a method II;
wherein the method I comprises the following steps:
(A1) subjecting an aqueous hypophosphite solution and an antioxidant to a free radical reaction with ethylene in the presence of an initiator to obtain an aqueous diethylphosphinate solution;
(A2) mixing the aqueous diethylphosphinate solution obtained in step (A1), an aqueous metal salt solution, and an alkaline solution, and carrying out a reaction under a condition of a pH value of 3.5-3.8 to obtain a diethylphosphinate metal salt slurry; and
(A3) mixing and stirring the diethylphosphinate metal salt slurry obtained in step (A2) with a flocculant to obtain a diethylphosphinate metal salt flocculate; and filtering, washing, and drying the diethylphosphinate metal salt flocculate to obtain the polymer additive; and
the method II comprises the following steps:
(B1) subjecting an aqueous hypophosphorous acid solution and an antioxidant to a free radical reaction with ethylene under the action of an initiator to obtain an aqueous diethylphosphinic acid solution;
(B2) subjecting the aqueous diethylphosphinic acid solution obtained in step (B1), sulfuric acid, and a metal hydroxide to a reaction, followed by adding an alkaline solution to obtain a diethylphosphinate slurry with a pH value of 3.8-4.2; and
(B3) mixing and stirring the diethylphosphinate slurry obtained in step (B2) with a flocculant to obtain a diethylphosphinate flocculate; and filtering, washing, and drying the diethylphosphinate flocculate to obtain the polymer additive.

6. The preparation method according to claim 5, wherein the antioxidants in step (A1) and step (B1) each independently comprise any one or a combination of at least two of a hindered phenol antioxidant, a hindered amine antioxidant, a phosphite antioxidant, and a thioester antioxidant;
and/or the initiators in step (A1) and step (B1) each independently comprise any one or a combination of at least two of an organic peroxide, a persulfate, an azo initiator, and a photoinitiator;
and/or the flocculants in step (A3) and step (B3) each independently comprise a polyacrylamide flocculant.

7. The preparation method according to claim 5, wherein a temperature of the free radical reaction in step (A1) is 70-120°C;
and/or a temperature of the reaction in step (A2) is 20-80°C;
and/or a temperature of the mixing in step (A3) is 40-60°C;
and/or the number of washings in step (A3) is ≥ 4;
and/or a temperature of the free radical reaction in step (B1) is 60-105°C;
and/or a temperature of the reaction in step (B2) is 70-150°C;
and/or a temperature of the mixing in step (B3) is 40-60°C;
and/or the number of washings in step (B3) is ≥ 4.

8. An application of the polymer additive according to any one of claims 1-4 in a polymer material.

9. A polymer composition, comprising a polymer matrix and the polymer additive according to any one of claims 1-4.

10. The polymer composition according to claim 9, comprising, in parts by mass, the following components:
| | |
|---|---|
| the polymer matrix | 40-99 parts |
| the polymer additive | 5-35 parts. |
